# EUROPÄISCHE PATENTSCHRIFT

(11) **EP 3 705 914 B1**
(45) Veröffentlichungstag und Bekanntmachung des Hinweises auf die Patenterteilung: **08.11.2023**
(21) Anmeldenummer: 20166999.1
(22) Anmeldetag: 11.04.2016
(51) Int. Cl.: G01S 17/88, G01S 17/74, G01S 7/499, G01S 7/497

(54) **SENSORANORDNUNG**
SENSOR ARRANGEMENT
SYSTÈME DE DÉTECTION

(43) Veröffentlichungstag der Anmeldung: 09.09.2020
(62) Teilanmeldung aus: 16164597.3
(73) Patentinhaber: Leuze electronic GmbH + Co. KG, 73277 Owen/Teck (DE)
(72) Erfinder: Aldiek, Norbert, 73230 Kirchheim/Teck (DE); Feller, Bernhard, 86316 Friedberg (DE); Heckmayr, Alexander, 86807 Buchloe (DE); Kirchner, Markus, 72636 Frickenhausen (DE); Tassy, Sven, 73230 Kirchheim unter Teck (DE); Tippmann, Martin, 73235 Weilheim an der Teck (DE); Wolf, Tilo, 73240 Wendlingen (DE)
(74) Vertreter: Ruckh, Rainer Gerhard

(56) Entgegenhaltungen:
- EP-A1- 2 927 711
- WO-A1-80/02764
- WO-A1-99/24850
- US-A- 5 828 057

## Beschreibung

Die Erfindung betrifft eine Sensoranordnung gemäß dem Oberbegriff des Anspruchs 1.

Derartige Sensoranordnungen können insbesondere optische Sensoren aufweisen, welche Distanzsensoren ausbilden. Ein derartiger optischer Sensor weist typischerweise einen Lichtstrahlen emittierenden Sender als Sendeeinheit und einen Lichtstrahlen empfangenden Empfänger als Empfangseinheit auf. Die mit dem optischen Sensor durchgeführte Distanzmessung erfolgt beispielsweise nach dem Pulslaufzeitprinzip. Der Sender emittiert hierbei Lichtstrahlen in Form von Lichtimpulsen. Zur Bestimmung einer Objektdistanz werden die Laufzeiten der Lichtimpulse vom Sender zum Objekt und zurück zum Empfänger ausgewertet.

Die mit einem solchen optischen Sensor durchgeführte Distanzmessung kann insbesondere gegen ein Objekt in Form eines Reflektors erfolgen. Der Reflektor kann einen Überwachungsbereich begrenzen, innerhalb dessen eine Objektdetektion erfolgen soll. Ein solcher optischer Sensor ist aus der DE 41 19 797 A1 bekannt. Weiterhin kann ein solcher Reflektor an einem zu erfassenden Gegenstand wie einem Fahrzeug angeordnet sein. Nachteilig bei derartigen Sensoranordnungen ist, dass die mit den Sensoren durchgeführten Distanzmessungen nicht sicher sind, da der dem Sensor zugeordnete Reflektor nicht eindeutig von anderen Objekten, insbesondere Störobjekten, unterschieden werden kann.

Die WO 80/02764 A1 (D1) betrifft ein Verfahren zur Raumüberwachung mittels gepulster Richtstrahlung. Durch Festlegung bestimmter Punkte im Raum wird mindestens eine virtuelle Linie oder virtuelle Fläche definiert, durch welche eine Fläche in Teilflächen oder ein Raum in Teilräume aufgespalten wird.

Diesen Teilflächen oder Teilräumen wird je eine bestimmte Bedeutung zugeordnet. Durch Messstrahlen wird direkt oder indirekt mindestens ein Parameter zur Identifikation mindestens eines Objektes ermittelt, wobei die Messstrahlen in definierte Richtungen ausgesandt werden.

Die US 5 828 057 A betrifft eine Anordnung zum Suchen eines Ziels mittels einer elektromagnetischen Strahlung emittierenden Einheit. Die Einheit prüft, ob die Strahlung von einem Reflektor zurückreflektiert wird, welcher das Ziel definiert. Der Reflektor wird dadurch erfasst, dass dieser die Polarisierung oder Polarisationsmodulation der Strahlung ändert.

Die WO 99/24 850 A1 (D3) betrifft eine optoelektronische Vorrichtung zum Erfassen von Objekten in einem Überwachungsbereich, an dessen einem Ende ein Sendelichtstrahlen emittierende Sender und zwei Empfangslichtstrahlen empfangende Empfänger mit jeweils einem vorgeordneten ersten und zweiten linear polarisierenden Element, deren Polarisationsrichtungen um einen Winkel α im Bereich 45°< α < 135° gegeneinander gedreht sind, angeordnet sind, um an dessen anderem Ende eine Reflektoreinheit, bestehend aus einem Reflektor und einem vorgeordneten dritten linear polarisierenden Element, dessen Polarisationsrichtung mit der Polarisationsrichtung des ersten oder zweiten polarisierenden Elements im wesentlichen übereinstimmt angeordnet ist. Die an Ausgängen der Empfänger anstehenden Empfangssignale werden jeweils mit zwei unterschiedlichen Schwellwerten S1 und S2 (S2>S 1) bewertet werden, deren Abstand so gewählt ist, dass nur bei freiem Strahlengang das Empfangssignal eines Empfängers oberhalb von S2 und das Empfangssignal des zweiten Empfängers unterhalb von S1 liegt. Weiterhin sind Mittel zur Testung der Vorrichtung vorgesehen.

In der EP 2 927 711 A1 (D4) wird ein Laserscanner beschrieben, der einen Lichtsender zum Aussenden eines Lichtsignals in einen Überwachungsbereich, einen Lichtempfänger zum Erzeugen eines Empfangssignals aus dem von Objekten in dem Überwachungsbereich emittierten Lichtsignal, eine bewegliche Ablenkeinheit zur periodischen Ablenkung des Lichtsignals, um im Verlauf der Bewegung den Überwachungsbereich abzutasten, und eine Auswertungseinheit zur Erfassung der Objekte anhand des Empfangssignals und zum Testen des Signalpfads vom Aussenden des Lichtsignals bis zum Erfassen der Objekte aufweist. Dabei ist die Auswertungseinheit dafür ausgebildet, Objekte auch in Winkelstellungen der Ablenkeinheit zu erfassen, in denen der Signalpfad getestet wird.

Der Erfindung liegt die Aufgabe zugrunde, eine Sensoranordnung der eingangs genannten Art bereitzustellen, mittels der eine sichere Objektvermessung ermöglicht wird.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Sensoranordnung mit einem Sensor, welcher wenigstens eine elektromagnetische Wellen emittierende Sendeeinheit, eine elektromagnetische Wellen empfangende Empfangseinheit und eine Auswerteeinheit, in welcher in Abhängigkeit von Empfangssignalen der Empfangseinheit Objektdistanzen und/oder Objektgeschwindigkeiten bestimmt werden, aufweist. Die Sensoranordnung weist wenigstens eine Reflektoreinheit auf, wobei von der Sendeeinheit emittierte elektromagnetische Wellen auf die Reflektoreinheit geführt sind. Die Reflektoreinheit ändert wenigstens eine Eigenschaft der elektromagnetischen Wellen. Die so geänderten elektromagnetischen Wellen sind von der Reflektoreinheit zurück zur Empfangseinheit geführt. Die Sensoranordnung weist mehrere, räumlich getrennte Reflektoreinheiten auf. Durch die Reflektoreinheiten sind unterschiedliche Schutzzonen gebildet, wobei eine oder mehrere Schutzzonen auswählbar sind, innerhalb derer eine Objektdetektion erfolgt, und wobei die Auswahl von Schutzzonen in Abhängigkeit von mit dem Sensor erfassten Codes der Reflektoreinheit erfolgt.

Die Sensoranordnung weist als erste Komponente einen Sensor auf, mit dem Distanzen und/oder Geschwindigkeiten von Objekten bestimmt werden können. Vorteilhaft bildet der Sensor einen Distanzsensor, bei welchem aus der gemessenen Distanz eines Objekts weitere kinematische Größen wie die Geschwindigkeit und auch die Beschleunigung des detektierten Objekts abgeleitet werden. Vorteilhaft erfolgt mit dem Distanzsensor eine Entfernungsmessung nach dem Pulslaufzeitprinzip oder nach dem Phasenmessprinzip.

Zur Durchführung der Objektdetektion emittiert die Sendeeinheit des Senders generell elektromagnetische Wellen, die von dem zu detektierenden Objekt zurück zur Empfangseinheit geführt werden, wobei die dadurch generierten Empfangssignale der Empfangseinheit in der Auswerteeinheit des Sensors zur Bestimmung der Distanz, der Geschwindigkeit und/oder der Beschleunigung des Objekts ausgewertet werden.

Der Grundgedanke der Erfindung besteht darin, die mit dem Sensor durchgeführten Messungen gegen ein definiertes Ziel in Form einer Reflektoreinheit durchzuführen. Wesentlich hierbei ist, dass die Reflektoreinheit wenigstens eine Eigenschaft der von der Sendeeinheit emittierten elektromagnetischen Wellen ändert und dann die so geänderten elektromagnetischen Wellen zurück zur Empfangseinheit führt, wobei die Empfangseinheit so ausgebildet ist, dass diese die geänderten elektromagnetischen Wellen empfangen und registrieren kann, so dass anhand der dadurch in der Empfangseinheit generierten Empfangssignale die Distanz- und/oder Geschwindigkeitsbestimmung erfolgen kann.

Damit unterscheiden sich die von der Reflektoreinheit zurückreflektierten elektromagnetischen Wellen in charakteristischer Weise von elektromagnetischen Wellen, die von anderen Objekten, insbesondere Störobjekten, zur Empfangseinheit geführt sind, da diese anderen Objekte die elektromagnetischen Wellen nicht wie die Reflektoreinheit ändern. Damit aber kann durch die Registrierung der von der Reflektoreinheit zurückreflektierten elektromagnetischen Wellen diese Reflektoreinheit von allen anderen Objekten sicher unterschieden werden. Damit wird mit geringem Aufwand eine sichere Messung mit dem Sensor gewährleistet.

Um eine möglichst sichere und vorzugsweise quantitative Unterscheidung der Reflektoreinheit von anderen Objekten zu erhalten, kann die Empfangseinheit derart zweikanalig ausgebildet sein, dass der erste und zweite Empfangskanal jeweils bei einer Detektion der Reflektoreinheit einerseits und bei einer Detektion eines Objekts andererseits charakteristisch unterschiedliche Empfangssignale generieren. Dann kann durch einen Vergleich der Empfangssignale beider Empfangskanäle sicher ein Objekt von der Reflektoreinheit unterschieden werden. Alternativ hierzu kann bei einer einkanaligen Empfangsstruktur eine zweikanalige Sendeeinheit, die zwei unterschiedliche Arten von elektromagnetischen Wellen emittiert, vorgesehen sein.

Die in der Reflektoreinheit erfolgende Änderung der elektromagnetischen Wellen kann derart erfolgen, dass in der Empfangseinheit selektiv nur noch diese geänderten elektromagnetischen Wellen registriert werden. Die von anderen Objekten zurückreflektierten, nicht geänderten elektromagnetischen Wellen werden dagegen vollständig ausgefiltert. In diesem Fall werden in der Auswerteeinheit selektiv nur noch die von der Reflektoreinheit zurückreflektierten geänderten elektromagnetischen Wellen ausgewertet.

Alternativ werden von der Empfangseinheit zwar sowohl die von der Reflektoreinheit zurückreflektierten, geänderten elektromagnetischen Wellen als auch die von anderen Objekten, nicht geänderten elektromagnetischen Wellen in der Empfangseinheit registriert. In diesem Fall können in der Auswerteeinheit die nicht geänderten elektromagnetischen Wellen eindeutig unterschieden werden, so dass dadurch eine Unterscheidung der Reflektoreinheit von anderen Objekten möglich wird.

Erfindungsgemäß erfolgt mit der Sensoranordnung eine Überwachung von Schutzzonen, die durch die einzelnen Reflektoreinheiten gebildet, d.h. insbesondere begrenzt werden.

Erfindungsgemäß weist hierzu die Sensoranordnung mehrere, räumliche getrennte Reflektoreinheiten auf.

Insbesondere sind bei einem als optischen Sensor ausgebildeten Sensor die Reflektoreinheiten von Reflektoren mit unterschiedlichen, vorgeordneten polarisierenden Elementen gebildet.

Die Sendeeinheiten des Sensors werden dann als Sender ausgebildet, die Lichtstrahlen mit unterschiedlichen Polarisationseigenschaften aufweisen.

Für den Fall, dass mit dem Sensor der Sensoranordnung ein räumlich ausgedehnter Bereich überwacht wird, können durch die Reflekoreinheiten unterschiedliche Schutzzonen gebildet sein.

Vorteilhaft sind in diesem Fall eine oder mehrere Schutzzonen auswählbar, innerhalb derer eine Objektdetektion erfolgt.

Beispielsweise erfolgt die Auswahl von Schutzzonen in Abhängigkeit von mit dem Sensor erfassten Codes.

Zweckmäßig werden in einem Einlernvorgang Schutzzonen in den Sensor eingelernt.

Für eine Überwachung eines räumlich ausgebildeten Bereichs ist es zweckmäßig, dass bei einem als optischen Sensor ausgebildeten Sensor die Empfangseinheit von einem ortsauflösenden Detektor gebildet ist.

Gemäß einer ersten Variante ist der ortsauflösende Detektor eine Kamera.

Da in diesem Fall nicht unmittelbar mit dem Detektor Distanzen gemessen werden, können Distanzinformationen durch die Detektion spezifischer, räumlich verteilter Reflektoreinheiten, die ihrerseits Ortsinformationen beinhalten, gewonnen werden.

Gemäß einer zweiten Variante ist der ortsauflösende Detektor eine Entfernungsbildkamera.

Die Distanzmessung kann dann für alle lichtempfindlichen Elemente der Kamera beispielsweise nach einem Pulslaufzeitverfahren oder Laufzeitverfahren erfolgen.

Gemäß einer vorteilhaften Weiterbildung weist die Sensoranordnung eine umschaltbare Sendeeinheit auf, wobei durch Umschaltungen die Sendeeinheit unterschiedliche elektromagnetische Wellen emittiert.

Damit wird die Funktionalität der Sensoranordnung erweitert, da durch die umschaltbare Sendeeinheit Reflektoreinheiten mit unterschiedlichen Eigenschaften erkannt werden können.

Beispielsweise kann bei einer Sensoranordnung mit einem optischen Sensor ein Sender vorgesehen sein, der Umschaltmittel aufweist, mittels derer der Sender Lichtstrahlen mit unterschiedlichen Polarisationen emittiert.

Gemäß einer vorteilhaften Weiterbildung bilden die Sendeeinheiten optische Sender, wobei den Sendern jeweils ein Empfänger zugeordnet ist, wodurch ein Lichtvorhang gebildet ist.

Alternativ weist die Sensoranordnung eine Sendeeinheit auf, deren elektromagnetische Wellen über eine Ablenkeinheit periodisch sind.

Damit können mit der Sensoranordnung ausgedehnte Bereiche erfasst werden.

Besonders vorteilhaft weist die Sensoranordnung mehrere Sendeeinheiten auf, wobei diese unterschiedliche elektromagnetische Wellen ausstrahlen und/oder elektromagnetische Wellen in unterschiedlichen Richtungen ausstrahlen.

Derartige Sensoren eignen sich besonders für eine Überwachung räumlich ausgedehnter Bereiche.

Die Erfindung wird im Folgenden Fall anhand der Zeichnungen erläutert. Es zeigen:
- Figur 1:: Erstes Ausführungsbeispiel der erfindungsgemäßen Sensoranordnung.
- Figur 2:: Zweites Ausführungsbeispiel der erfindungsgemäßen Sensoranordnung.
- Figur 3:: Drittes Ausführungsbeispiel einer Sensoranordnung.
- Figur 4:: Einzeldarstellung der Anordnung von Reflekoreinheiten für die Sensoranordnung gemäß Figur 3.
- Figur 5:: Variante einer Anordnung von Reflektoreinheiten für die Sensoranordnung gemäß Figur 3.
- Figur 6:: Viertes Ausführungsbeispiel einer Sensoranordnung
a) mit einer ersten Anordnung von Reflektoreinheiten
b) mit einer zweiten Anordnung von Reflektoreinheiten
- Figur 7:: Fünftes Ausführungsbeispiel einer Sensoranordnung
a) mit einer ersten Anordnung von Reflektoreinheiten
b) mit einer zweiten Anordnung von Reflektoreinheiten
- Figur 8:: a) Weitere Anordnung von Reflektoreinheiten für eine Sensoranordnung
b) Kamerabild für einen aktivierten ersten Sender der Sensoranordnung
c) Kamerabild für einen aktivierten zweiten Sender der Sensoranordnung
- Figur 9a, b:: Weitere Anordnungen von Reflektoreinheiten für eine Sensoranordnung.
- Figur 10:: Sechstes Ausführungsbeispiel einer Sensoranordnung.
- Figur 11:: Siebtes Ausführungsbeispiel einer Sensoranordnung.

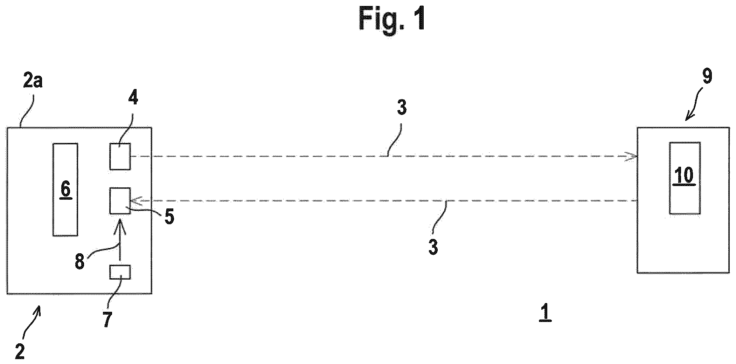

Figur 1 zeigt ein erstes Ausführungsbeispiel der erfindungsgemäßen Sensoranordnung 1. Die Sensoranordnung 1 umfasst einen Sensor 2 mit in einem Gehäuse 2a angeordneten Sensorkomponenten. Der Sensor 2 weist eine elektromagnetische Wellen 3 emittierende Sendeeinheit 4 und eine elektromagnetische Wellen 3 empfangende Empfangseinheit 5 auf. Im vorliegenden Fall emittiert die Sendeeinheit 4 elektromagnetische Wellen 3 im Radio- oder Mikrowellenbereich. Die Sendeeinheit 4 weist ein dementsprechend ausgebildetes Sendeelement zur Emission der Radio- und Mikrowellenstrahlung auf. Die Empfangseinheit 5 weist ein für diese Strahlung empfindliches Empfangselement auf. Der Sensor 2 umfasst weiterhin eine Auswerteeinheit 6, die von einem Mikroprozessor oder dergleichen gebildet ist.

Die Auswerteeinheit 6 dient zur Steuerung der Sendeeinheit 4. Weiterhin dient die Auswerteeinheit 6 zur Auswertung von in der Empfangseinheit 5 generierten Empfangssignalen. In Abhängigkeit dieser Empfangssignale generiert die Auswerteeinheit 6 Ausgangssignale die über einen nicht dargestellten Ausgang oder eine geeignete Schnittstelle ausgegeben werden.

Der Sensor 2 bildet einen Distanzsensor. Im vorliegenden Fall erfolgt die Distanzmessung nach einem Puls-Laufzeit-Verfahren. Dabei emittiert die Sendeeinheit 4 elektromagnetische Wellen 3 in Form von Pulsfolgen, wobei zur Distanzbestimmung jeweils die Laufzeit eines Pulses von der Sendeeinheit 4 zu einem Objekt und von diesem zurück zur Empfangseinheit 5 ausgewertet wird. Alternativ kann die Distanzmessung nach dem frequency modulated continuous wave-Prinzip (fmcw) Phasenmessprinzip erfolgen. In diesem Fall ist den in der Sendeeinheit 4 emittierten elektromagnetischen Wellen 3 eine zeitlich veränderte Modulationsfrequenz aufgeprägt.

Zur Objektdetektion werden die von der Sendeeinheit 4 emittierten elektromagnetischen Wellen 3 aus dem Gehäuse 2a des Sensors 2 in einen Überwachungsbereich geführt, wobei von einem dort angeordneten Objekt die elektromagnetischen Wellen 3 zurück zur Empfangseinheit 5 geführt sind.

Für eine Funktionsprüfung des Sensors 2 ist weiterhin eine Testsendeeinheit 7 vorgesehen, die Teststrahlung 8 in Form von elektromagnetischen Wellen 3 emittiert. Die von der Testsendeeinheit 7 emittierte Teststrahlung 8 wird direkt in die Empfangseinheit 5 eingestrahlt, das heißt sie wird nicht aus dem Gehäuse 2a geführt.

Die von der Testsendeeinheit 7 emittierte Teststrahlung 8 wird in der Empfangseinheit 5 empfangen und in der Auswerteeinheit 6 ausgewertet. Vorteilhaft ist in der Auswerteeinheit 6 eine bestimmte Erwartungshaltung für die empfangene Teststrahlung 8 hinterlegt, welche im fehlerfreien Fall auch bei dem Empfang der Teststrahlung 8 erhalten wird. Eine Fehleraufdeckung von Sensorkomponenten erfolgt durch eine Analyse der Abweichungen der Testmessungen von der Erwartungshaltung.

Die Funktionsüberprüfung erfolgt unabhängig von der Objektdetektion, indem die Testsendeeinheit 7 die Teststrahlung 8 nur in den Sendepausen der Sendeeinheit 4 emittiert.

Erfindungsgemäß weist die Sensoranordnung 1 eine dem Sensor 2 zugeordnete Reflektoreinheit 9 auf. Die Reflektoreinheit 9 weist im vorliegenden Fall einen Transponder 10 auf.

Durch die so gebildete Reflektoreinheit 9 werden die von der Sendeeinheit 4 emittierten elektromagnetischen Wellen 3 in charakteristischer Weise geändert. Im vorliegenden Fall wird den elektromagnetischen Wellen 3, die von der Sendeeinheit 4 emittiert werden, Dateninhalte aufgeprägt. In dem Transponder 10 werden diese Dateninhalte empfangen und geändert. Dann werden vom Transponder 10 elektromagnetische Wellen 3 mit den geänderten Dateninhalten an die Empfangseinheit 5 zurückgesendet.

Anhand der in der Empfangseinheit 5 empfangenen elektromagnetischen Wellen 3 mit den geänderten Dateninhalten kann die Reflektoreinheit 9 in der Auswerteeinheit 6 erkannt und von allen anderen Objekten, insbesondere Störobjekten, eindeutig unterschieden werden, da diese die elektromagnetische Wellen 3 der Sendeeinheit 4 ohne Veränderungen der Dateninhalte zurücksenden.

Damit kann in der Auswerteeinheit 6 selektiv die Distanz der Reflektoreinheit 9 zum Sensor 2 bestimmt werden, wobei durch die Änderung der elektromagnetischen Wellen 3 in der Reflektoreinheit 9 eine sichere Distanzmessung derart gewährleistet ist, dass diese nicht durch Störobjekte beeinflusst ist.

Weiterhin können aus der ermittelten Distanz der Reflektoreinheit 9 in der Auswerteeinheit 6 auch kinematische Größen wie die Geschwindigkeit oder die Beschleunigung der Reflektoreinheit 9 abgeleitet werden. Alternativ kann beispielsweise durch den Dopplereffekt auch eine direkte Geschwindigkeitsmessung durchgeführt werden. Die so bestimmten Größen können als Ausgangsgrö-βen über den Ausgang des Sensors 2 ausgegeben werden.

Eine vorteilhafte Applikation der Sensoranordnung 1 besteht darin, dass von einer stationären Einheit aus, die Position und Geschwindigkeit einer beweglichen Einheit wie zum Beispiel einem Fahrzeug oder einem beweglichen Anlagenteil, überwacht werden soll. Dann befindet sich der Sensor 2 vorteilhaft an der stationären Einheit und die Reflektoreinheit 9 an der beweglichen Einheit.

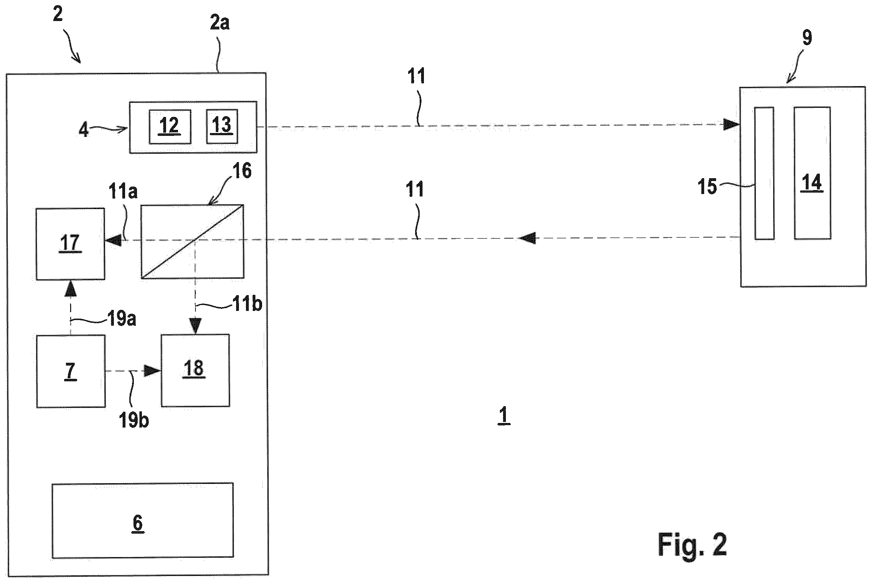

Figur 2 zeigt ein zweites Ausführungsbeispiel der erfindungsgemäßen Sensoranordnung 1. In diesem Fall weist die Sensoranordnung 1 einen Sensor 2 in Form eines optischen Sensors auf. Entsprechend der Ausführungsform gemäß Figur 1 bildet der Sensor 2 einen nach dem Laufzeitprinzip arbeitenden Distanzsensor, dessen Sensorkomponenten in einem Gehäuse 2a integriert sind.

Der optische Sensor weist eine Sendeeinheit 4 auf, die von einem Lichtstrahlen 11 emittierenden Sender 12, beispielsweise einer Leuchtdiode, gebildet ist. Als weiterer Bestandteil der Sendeeinheit 4 ist ein dem Sender 12 nachgeordneter Polarisator 13 vorgesehen.

Alternativ kann der Sender 12 auch von einer Laserdiode gebildet sein, die polarisiertes Licht emittiert.

Damit emittiert die Sendeeinheit 4 Lichtstrahlen 11 mit einer bestimmten Polarisationsrichtung.

Weiterhin könnte auch ein Sender 12 vorgesehen sein, der unpolarisiertes Licht emittiert.

Die Lichtstrahlen 11 der Sendeeinheit 4 sind, wie Figur 2 zeigt, auf eine Reflektoreinheit 9 geführt, die einen Reflektor 14, insbesondere Retroreflektor, mit einem vorgeordneten weiteren Polarisator 15 umfasst.

Die Polarisationseigenschaften der Lichtstrahlen 11 werden somit bei der Reflexion an der Reflektoreinheit 9 in charakteristischer Weise geändert.

Die von der Reflektoreinheit 9 zurückreflektierten Lichtstrahlen 11 werden auf eine Trenneinrichtung 16 geführt, die von einem polarisierenden Strahlteiler oder dergleichen gebildet ist. Hinter der Trenneinrichtung 16 sind zwei Empfänger 17, 18 angeordnet, welche zum Empfang von Lichtstrahlen 11 ausgebildet sind. Die Empfänger 17, 18 bilden die Empfangseinheit 5 des optischen Sensors.

Werden die von der Sendeeinheit 4 emittierten Lichtstrahlen 11 nicht auf die Reflektoreinheit 9, sondern auf ein anderes Objekt geführt, bleibt die Polarisationsrichtung der Lichtstrahlen 11 zumindest im Wesentlichen erhalten. Diese zurückreflektierten Lichtstrahlen 11 durchsetzen die Trenneinrichtung 16 und werden als Lichtstrahlen 11a auf den ersten Empfänger 17 geführt. Werden jedoch die Lichtstrahlen 11a der Sendeeinheit 4 auf die Reflektoreinheit 9 geführt, so wird bei Reflexion der Lichtstrahlen 11a an der Reflekoreinheit 9 deren Polarisation so geändert, dass Lichtstrahlen 11b von der Trenneinrichtung 16 zumindest überwiegend auf den zweiten Empfänger 18 geführt sind. Allgemein wird die Trenneinheit so ausgebildet, dass das Licht, das über die Reflektoreinheit 9 durch den Polarisator 13 gelangt ist, überwiegend in einen Zweig gelangt, während das Licht, das den Retroreflektor nicht erreichen konnte und an anderen Objekten reflektiert wurde, zum größeren Teil in den jeweils anderen Zweig gelangt beziehungsweise sich zu gleichen Teilen auf die beiden Zweige verteilt.

In der Auswerteeinheit 6 kann somit durch einen Vergleich der auf die Empfänger 17, 18 auftreffenden Lichtmengen klar unterschieden werden, ob eine Detektion der Reflektoreinheit 9 oder eines anderen Objekts vorliegt.

Entsprechend der Ausführungsform gemäß Figur 1 erfolgt damit auch bei dem optischen Sensor der Figur 2 eine sichere Distanzmessung, bei der die Reflektoreinheit 9 als Ziel sicher von anderen Objekten, insbesondere Störobjekten unterschieden werden kann.

Im optischen Sensor ist weiterhin eine Testsendeeinheit 7 integriert. Mit dieser werden in den Sendepausen der Sendeeinheit 4 Testsendelichtstrahlen 19a, b direkt in die Empfänger 17, 18 eingestrahlt. Die Funktionsprüfung des Sensors 2 mit der Testsendeeinheit 7 erfolgt analog zu der Ausführungsform gemäß Figur 1.

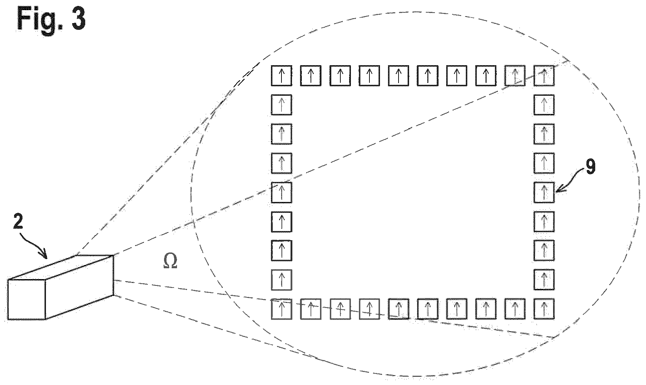

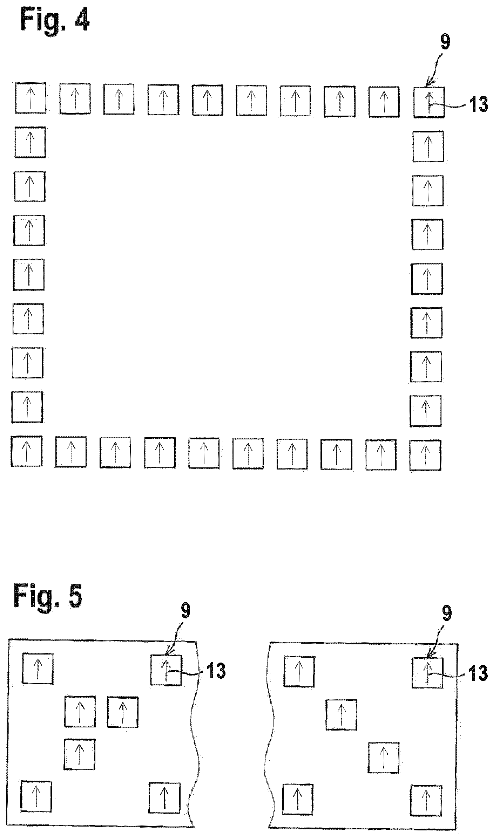

Figur 3 zeigt einen als optischen Sensor ausgebildeten Sensor 2, der als Sendeeinheit 4 mehrere Lichtstrahlen 11, 11a emittierende Sendeelemente aufweist, wobei die Lichtstrahlen 11, 11a in einen Raumwinkelbereich Ω abgestrahlt werden. Die Sendeelemente können alternierend aktiviert werden. Als Empfangseinheit 5 ist ein ortslauflösender Detektor, insbesondere eine Kamera vorgesehen. Die Sensoranordnung 1 umfasst eine Anordnung von Reflektoreinheiten 9, die räumlich verteilt angeordnet sind. Diese Anordnung ist in Figur 4 einzeln dargestellt. Jede Reflektoreinheit 9 besteht aus einem Reflektor 14 mit einem vorgeordneten Polarisator 13, wobei in Figur 4 nur der Polarisator 13 sichtbar ist. Figur 5 zeigt eine Variante einer Anordnung von derartigen polarisierenden Elementen für die Sensoranordnung 1 gemäß Figur 4. In diesem Fall repräsentieren die Reflektoreinheiten 9 Codes. Durch den Sensor 2 und die Anordnung von Reflektoreinheiten 9 wird ein Überwachungsvolumen aufgespannt.

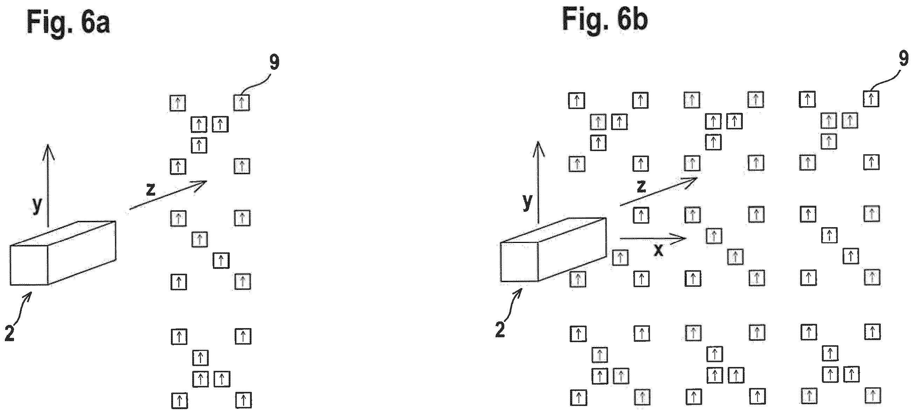

Die Figuren 6a, 6b zeigen einen Sensor 2 in Form eines optischen Sensors mit einer Entfernungsbildkamera. Die Sensoranordnung 1 gemäß Figur 6a beziehungsweise 6b weist eine Anordnung von Reflektoreinheiten 9 bestehend jeweils aus einem Reflektor 14 und einem Polarisator 13 auf, analog zur Ausführung gemäß Figur 4.

Mit der ortsauflösenden Entfernungsbildkamera können die räumlich getrennten Polarisatoren 13 unterschieden werden. Damit ist es möglich die Richtungen, unter denen Objekte in die Strecke zwischen der Anordnung der Reflektoreinheit 9 und Sensor 2 eintreten, zu unterscheiden. Falls die Polarisatoranordnungen in Form Positionscodes band- (Figur 6a) oder flächenförmig (Figur 6b) angeordnet sind und der Sensor 2 mit einem Fahrzeug oder einem mobilen Roboter verbunden ist, kann eine Sensorposition in Richtung senkrecht zur Verbindungslinie zwischen Sensor 2 und Reflektoranordnung bestimmt werden. Wenn die Codes auf einem mobilen Gerät angebracht sind, ist die Kamera in der Lage, Abstand, Position und Orientierung der Codes zu bestimmen und gleichzeitig den Raum zwischen Gerät und Kamera sicher zu überwachen. Sind die Reflektoreinheiten 9 wie in Figur 3 angeordnet, ist es möglich, die von der Anordnung der Reflektoreinheit 9 begrenzte Fläche zu überwachen. Sind mehrere Flächen mit Polarisationsanordnungen vorgesehen, so können diese durch mehrere Schutzzonen überwacht werden, die durch Codes gekennzeichnet werden. Durch Lesen der Codes können die Schutzzonen selektiv aktiviert werden.

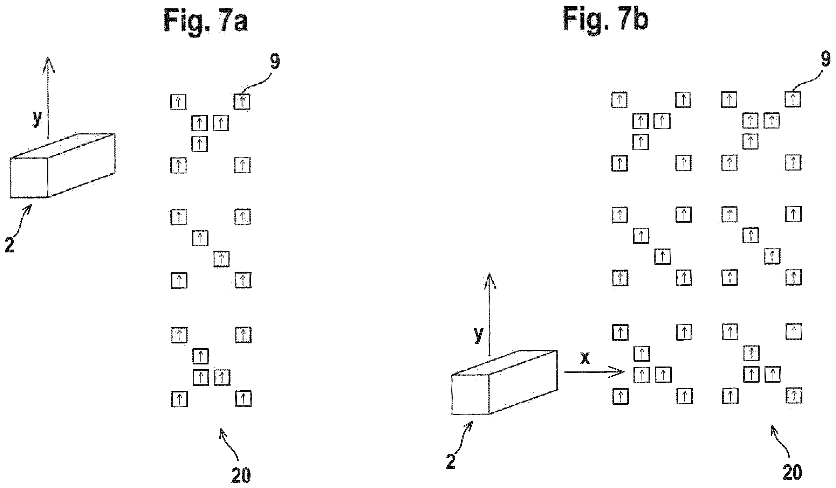

Figur 7a, 7b zeigt einen als optischen Sensor ausgebildeten Sensor 2 für eine Sensoranordnung 1. In diesem Fall weist der Sensor 2 als Empfangseinheit 5 eine Kamera als ortsauflösenden Detektor auf, mit der keine Distanzmessung erfolgt. In diesem Fall werden laterale Distanzinformationen durch Erfassen von geeigneten Reflektoreinheiten 9 gewonnen. Die Figuren 7a, 7b zeigen Testlichtmuster 20, mit denen einerseits der Sensor 2 getestet wird und andererseits der durch diese begrenzte Bereich überwacht wird.

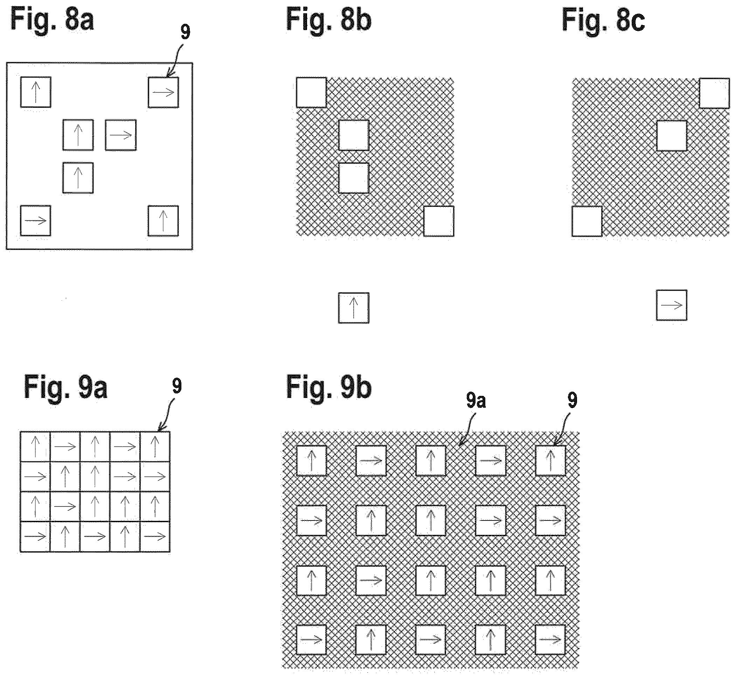

Figur 8a zeigt eine Anordnung von Reflektoreinheiten 9 für eine Sensoranordnung 1 mit einem optischen Sensor, der eine einkanalige Empfangsstruktur, jedoch eine zweikanalige Senderstruktur aufweist. Die Empfangsstruktur ist von einer Kamera gebildet. Wie Figur 8a zeigt, sind bei der Anordnung von Reflektoreinheiten 9 zwei verschiedene Polarisatoren 13a, 13b vor jeweils einem Reflektor vorgesehen.

Durch das Schalten der Polarisationsrichtung des zweikanaligen Senders 12 parallel und senkrecht zur Polarisation der den Reflektoren 14 zugeordneten Polarisatoren 13a, 13b, werden die Reflektorelemente alternierend mit sehr hohem Kontrast hell und dunkel abgebildet, so dass der Test der ortsaufgelösten Detektorstruktur durch das Umschalten des elektronisch polarisationsschaltenden Elements erfolgen kann.

Die Figuren 8a, 8b zeigen die Kamerabilder für die unterschiedlichen Senderaktivierungen. Dies kann alternativ auch durch eine Anordnung erreicht werden, bei der die Polarisationsrichtung des Sendelichts umgeschaltet wird. Ist eine Distanzinformation zwischen den Reflektorelementen und dem Sensor 2 erforderlich, wird die einkanalige ortsaufgelöste Detektorstruktur als Entfernungsbildkamera ausgeführt.

Die Figuren 9a, 9b zeigen weitere mögliche Anordnungen von Reflektoreinheiten 9. Die Reflektorelemente werden entweder flächenfüllend nebeneinander angebracht (Figur 9a) oder der Zwischenraum wird mit diffus reflektierendem Material 9a mit einem geringen Albedo (einer geringen Remission) ausgefüllt (Figur 9b).

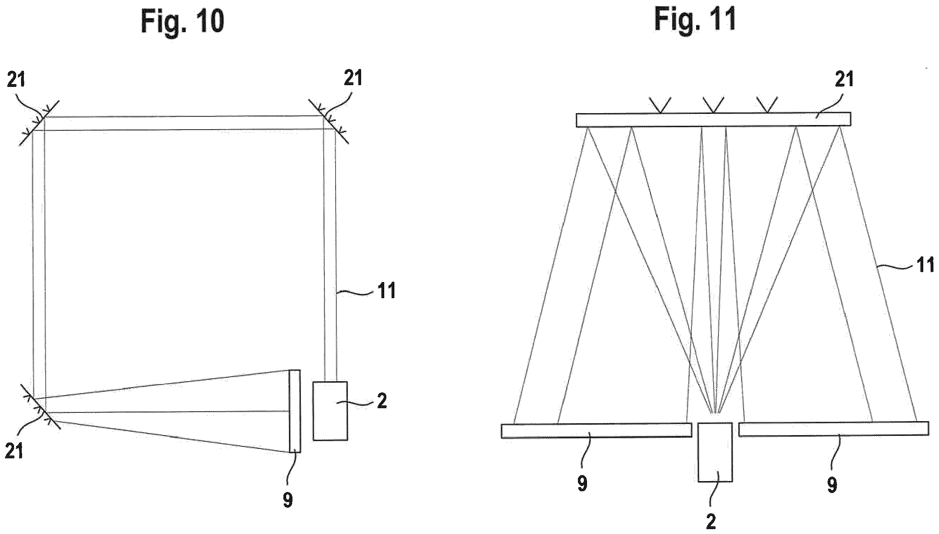

Figur 10 zeigt eine weitere Ausführungsform einer Sensoranordnung 1. Die Sensoranordnung 1 umfasst als Sensor 2 einen optischen Sensor. Der Sender 12 kann von einem einzelnen Sendeelement gebildet sein, der Empfänger 17, 18 besteht vorteilhaft aus einer Kamera. Die vom Sender 12 des Sensors 2 emittierten Lichtstrahlen 11 werden über Umlenkspiegel 21 auf eine Reflektoreinheit 9 eingeführt, die von einem Reflektor 14 mit vorgeordnetem Polarisator 13 gebildet sein kann. Durch diese Strahlführung der Lichtstrahlen 11 wird ein ausgedehnter Überwachungsbereich überwacht. Wesentlich ist, dass die aus metallischen Materialien bestehenden Umlenkspiegel 21 die Polarisationseigenschaften der Lichtstrahlen 11 im Wesentlichen unverändert lassen.

Figur 11 zeigt eine weitere Ausführungsform einer Sensoranordnung 1. Diese Sensoranordnung 1 umfasst einen optischen Sensor und zwei beidseits zu diesem angeordnete Reflektoreinheiten 9 auf einer Seite eines Überwachungsbereichs. Auf der anderen Seite des Überwachungsbereichs befindet sich ein Umlenkspiegel 21. Die Komponenten dieser Sensoranordnung 1 sind entsprechend zur Ausführungsform von Figur 10 ausgeführt. Die vom Sender 12 des Sensors 2 emittierten Lichtstrahlen 11, 11a werden durch Mehrfachreflexionen zwischen Umlenkspiegel 21 und den Reflektoreinheiten 9 zur Kamera geführt. Auch mit dieser Sensoranordnung 1 wird ein ausgedehnter Überwachungsbereich überwacht.

### Bezugszeichenliste

- (1): Sensoranordnung
- (2): Sensor
- (2a): Gehäuse
- (3): elektromagnetische Wellen
- (4): Sendeeinheit
- (5): Empfangseinheit
- (6): Auswerteeinheit
- (7): Testsendeeinheit
- (8): Teststrahlung
- (9): Reflektoreinheit
- (9a): diffus reflektierendes Material
- (10): Transponder
- (11): Lichtstrahlen
- (11a): Lichtstrahlen
- (11b): Lichtstrahlen
- (12): Sender
- (13): Polarisator
- (14): Reflektor
- (15): Polarisator
- (16): Trenneinrichtung
- (17): Empfänger
- (18): Empfänger
- (19a): Testsendelichtstrahlen
- (19b): Testsendelichtstrahlen
- (20): Testlichtmuster
- (21): Umlenkspiegel

## Patentansprüche

1. Sensoranordnung (1) mit einem Sensor (2), welcher wenigstens eine elektromagnetische Wellen (3) emittierende Sendeeinheit (4), eine elektromagnetische Wellen (3) empfangende Empfangseinheit (5) und eine Auswerteeinheit (6), in welcher in Abhängigkeit von Empfangssignalen der Empfangseinheit (5) Objektdistanzen und/oder Objektgeschwindigkeiten bestimmt werden, aufweist, wobei die Sensoranordnung (1) wenigstens eine Reflektoreinheit (9) aufweist, wobei von der Sendeeinheit (4) emittierte elektromagnetische Wellen (3) auf die Reflektoreinheit (9) geführt sind, **dadurch gekennzeichnet, dass** die Reflektoreinheit (9) wenigstens eine Eigenschaft der elektromagnetischen Wellen (3) ändert und die so geänderten elektromagnetischen Wellen (3) von der Reflektoreinheit (9) zurück zur Empfangseinheit (5) geführt sind, dass die Sensoranordnung mehrere, räumlich getrennte Reflektoreinheiten (9) aufweist, und dass durch die Reflektoreinheiten (9) unterschiedliche Schutzzonen gebildet sind, wobei eine oder mehrere Schutzzonen auswählbar sind, innerhalb derer eine Objektdetektion erfolgt, und wobei die Auswahl von Schutzzonen in Abhängigkeit von mit dem Sensor erfassten Codes der Reflektoreinheiten (9) erfolgt.

2. Sensoranordnung nach Anspruch 1, **dadurch gekennzeichnet, dass** in einem Einlernvorgang Schutzzonen in den Sensor (2) eingelernt werden.

3. Sensoranordnung nach einem der Ansprüche 1 oder 2, **dadurch gekennzeichnet, dass** diese eine umschaltbare Sendeeinheit (4) aufweist, wobei durch Umschaltungen die Sendeeinheit (4) unterschiedliche elektromagnetische Wellen (3) emittiert.

4. Sensoranordnung nach einem der Ansprüche 1 bis 3, **dadurch gekennzeichnet, dass** diese mehrere Sendeeinheiten (4) aufweist, wobei diese unterschiedliche elektromagnetische Wellen (3) ausstrahlen und/oder elektromagnetische Wellen (3) in unterschiedlichen Richtungen ausstrahlen.

5. Sensoranordnung nach einem der Ansprüche 1 bis 4, **dadurch gekennzeichnet, dass** der Sensor (2) ein optischer Sensor ist.

6. Sensoranordnung nach Anspruch 4, **dadurch gekennzeichnet, dass** die Sendeeinheiten (4) optische Sender bilden, wobei den Sendern (12) jeweils ein Empfänger (17) zugeordnet ist, wodurch ein Lichtvorhang gebildet ist.

7. Sensoranordnung nach einem der Ansprüche 1 bis 6, **dadurch gekennzeichnet, dass** diese eine Sendeeinheit (4) aufweist, deren elektromagnetische Wellen (3) über eine Ablenkeinheit periodisch abgelenkt sind.

8. Sensoranordnung nach einem der Ansprüche 5 bis 7, **dadurch gekennzeichnet, dass** bei einem als optischer Sensor ausgebildeten Sensor (2) die Reflektoreinheiten (9) von Reflektoren (14) mit unterschiedlichen, vorgeordneten polarisierenden Elementen gebildet sind.

9. Sensoranordnung nach einem der Ansprüche 5 bis 8, **dadurch gekennzeichnet, dass** bei einem als optischer Sensor ausgebildeten Sensor (2) die Empfangseinheit (5) von einem ortsauflösenden Detektor gebildet ist.

10. Sensoranordnung nach Anspruch 9, **dadurch gekennzeichnet, dass** der ortsauflösende Detektor eine Kamera ist.

## Claims

1. A sensor arrangement (1) with a sensor (2) which has at least one transmitting unit (4) emitting electromagnetic waves (3), a receiving unit (5) receiving electromagnetic waves (3) and an evaluating unit (6), in which object distances and/or object velocities are determined as a function of received signals from the receiving unit (5), the sensor arrangement (1) having at least one reflector unit (9), electromagnetic waves (3) emitted by the transmitting unit (4) being guided onto the reflector unit (9), **characterised in that** the reflector unit (9) is arranged in such a way that the electromagnetic waves (3) emitted by the transmitting unit (4) are guided onto the reflector unit (9), **in that** the reflector unit (9) changes at least one property of the electromagnetic waves (3) and the electromagnetic waves (3) changed in this way are guided back from the reflector unit (9) to the receiving unit (5), **in that** the sensor arrangement has a plurality of spatially separated reflector units (9), and **in that** different protective zones are formed by the reflector units (9), it being possible to select one or more protective zones within which object detection takes place, and protective zones being selected as a function of codes of the reflector units (9) detected by the sensor.

2. A sensor arrangement according to claim 1, **characterised in that** protective zones are taught into the sensor (2) in a teach-in process.

3. A sensor arrangement according to one of claims 1 or 2, **characterised in that** it has a switchable transmitting unit (4), the transmitting unit (4) emitting different electromagnetic waves (3) by switching.

4. A sensor arrangement according to one of claims 1 to 3, **characterised in that** it has a plurality of transmitting units (4), these emitting different electromagnetic waves (3) and/or emitting electromagnetic waves (3) in different directions.

5. A sensor arrangement according to one of claims 1 to 4, **characterised in that** the sensor (2) is an optical sensor.

6. A sensor arrangement according to claim 4, **characterised in that** the sensor units (4) form optical transmitters, wherein a receiver (17) is associated with each of the transmitters (12), whereby a light curtain is formed.

7. A sensor arrangement according to one of claims 1 to 6, **characterised in that** it has a transmitter unit (4) whose electromagnetic waves (3) are periodically deflected via a deflection unit.

8. A sensor arrangement according to one of the claims 5 to 7, **characterised in that**, in the case of a sensor (2) designed as an optical sensor, the reflector units (9) are formed by reflectors (14) with different, pre-arranged polarizing elements.

9. A sensor arrangement according to one of claims 5 to 8, **characterised in that**, in the case of a sensor (2) designed as an optical sensor, the receiver unit (5) is formed by a location-resolving detector.

10. A sensor arrangement according to claim 9, **characterised in that** the location-resolving detector is a camera.

## Revendications

1. Dispositif de détection (1) avec un capteur (2) comportant au moins une unité d'émission (4) émettant des ondes électromagnétiques (3), une unité de réception (5) recevant des ondes électromagnétiques (3) et une unité d'évaluation (6), dans lequel les distances et/ou les vitesses des objets sont déterminées en fonction des signaux reçus de l'unité de réception (5), le dispositif de détection (1) comporte au moins une unité de réflexion (9), les ondes électromagnétiques (3) émises par l'unité de transmission (4) étant guidées sur l'unité de réflexion (9), **caractérisé en ce que** l'unité de réflexion (9) est disposée de manière à ce que les ondes électromagnétiques (3) émises par l'unité de transmission (4) soient guidées sur l'unité de réflexion (9), l'unité de réflexion (9) modifie au moins une propriété des ondes électromagnétiques (3) et les ondes électromagnétiques (3) ainsi modifiées sont renvoyées de l'unité de réflexion (9) vers l'unité de réception (5), le capteur comporte plusieurs unités de réflexion (9) séparées dans l'espace, et différentes zones de protection sont formées par les unités de réflexion (9), une ou plusieurs zones de protection pouvant être sélectionnées pour la détection d'objets, les zones de protection étant sélectionnées en fonction des codes des unités de réflexion (9) détectées par le capteur.

2. Dispositif de capteur selon la revendication 1, **caractérisé par le fait que** les zones de protection sont enseignées au capteur (2) par un processus d'apprentissage.

3. Dispositif de capteur selon l'une des revendications 1 ou 2, **caractérisé par le fait qu'**il possède une unité de transmission commutable (4), l'unité de transmission (4) émettant différentes ondes électromagnétiques (3) par commutation.

4. Dispositif de détection selon l'une des revendications 1 à 3, **caractérisé en ce qu'**il comporte plusieurs unités de transmission (4), celles-ci émettant différentes ondes électromagnétiques (3) et/ou émettant des ondes électromagnétiques (3) dans différentes directions.

5. Dispositif de capteur selon l'une des revendications 1 à 4, **caractérisé en ce que** le capteur (2) est un capteur optique.

6. Dispositif de détection selon la revendication 4, **caractérisé en ce que** les unités de détection (4) forment des émetteurs optiques, un récepteur (17) étant associé à chacun des émetteurs (12), ce qui permet de former un rideau lumineux.

7. Dispositif de capteurs selon l'une des revendications 1 à 6, **caractérisé en ce qu'**il comporte une unité émettrice (4) dont les ondes électromagnétiques (3) sont périodiquement déviées par l'intermédiaire d'une unité de déviation.

8. Dispositif de capteur selon l'une des revendications 5 à 7, **caractérisé en ce que**, dans le cas d'un capteur (2) conçu comme capteur optique, les unités de réflecteur (9) sont formées par des réflecteurs (14) avec différents éléments de polarisation préétablis.

9. Dispositif de capteur selon l'une des revendications 5 à 8, **caractérisé par le fait que**, dans le cas d'un capteur (2) conçu comme un capteur optique, l'unité réceptrice (5) est constituée d'un détecteur à résolution d'emplacement.

10. Dispositif de capteur selon la revendication 9, **caractérisé par le fait que** le détecteur à résolution d'emplacement est une caméra.
